# EUROPEAN PATENT SPECIFICATION

(11) **EP 2 509 020 B1**
(45) Date of publication and mention of the grant of the patent: **30.05.2018**
(21) Application number: 11382100.3
(22) Date of filing: 05.04.2011
(51) Int. Cl.: G06F 21/00, G06F 21/10

(54) **Method for certifying reproduction of digital content**
Verfahren zur Zertifizierung der Wiedergabe von digitalem Inhalt
Procédé pour la certification de la reproduction d'un contenu numérique

(43) Date of publication of application: 10.10.2012
(73) Proprietor: COLORIURIS S.L., 50003 Zaragoza (ES)
(72) Inventor: Canut Zazurca, Pedro J., 50003 Zaragoza (ES)
(74) Representative: Pons

(56) References cited:
- US-A1- 2002 046 350
- US-A1- 2003 037 261

## Description

### OBJECT OF THE INVENTION

The present invention is encompassed within the field of computing and communications science, more specifically in those parts thereof relating to data logging security and certification.

The object of the invention allows us to determine and quantify the number of accesses made to a specific digital content, recording not only said accesses in a certified manner, but also the origin thereof in a reliable manner.

### BACKGROUND OF THE INVENTION

A private copy is a limitation of the exclusive right granted by law to the author and owner of contents to make copies thereof, which allows a person to make a copy of a work for private and non-profit-making use thereof provided that he/she has always had legitimate access to the original. The reason for its existence is to allow the marketing of equipment and media that allow the reproduction of protected material and was introduced at the request of the manufacturers thereof. In turn, these proposed a compensatory royalty payment for intellectual property rights owners.

In recent years, with the popularisation of the Internet and increased connection capacity, downloading material under authors' monopoly rights has become intensified. In the debate triggered by their appearance, some believe that this could represent the end of the music or film industry. Others affirm that this only represents the end of the enormous creation of preconceived artists (or media stars) in accordance with the changing optimum market performance model. In any case, downloads of audiovisual material by peer-to-peer systems cannot be considered private copies under the protection of the royalty payment, as the user who performs the download has not had access to the original. The law conceptualises these as a modality of public communication, i.e. the distribution of protected content to multiple users without mediation of delivery of copies on physical media which cannot be performed without the owner's authorisation.

The legislations of different countries, due to the impossibility of controlling all domestic copies made, have decided to somehow regulate said copies made without the authorisation of the author rights owners. In this regard, systems such as the North American fair use doctrine, with unevaluated exceptions that must fulfil the provisions of Article 107 of the Copyright Act relative to "Limitations on Private Copies", born in Germany in the sixties and still in force in most European countries. In the seventies, making copies of music for private use was legalised, charging a 3% sales tax on the price of all the equipment and media capable of doing so.

Each state decides the limits and conditions that must be applied to this copy for it to be effectively legal, although if they allow the existence of "private copies" they must establish a remuneration system which adequately compensates rights owners, a system which can be materialised, among other options, through a royalty payment or economic compensation chargeable to certain devices or media. Nevertheless, the European directive which regulates the right of private copying does not establish how said compensation must be managed.

Logically, in order to quantify said rights it must be irrefutably ascertained that certain digital content has been downloaded, who downloaded it, how many times, if it was copied in addition to being downloaded. Additionally, this must all be recorded in a log file in such a manner as to leave no doubt as to the authenticity of the data and, in turn, to ensure the security of the log file not only in terms of its location or storage but also in terms of its integrity. Document US2002046350 discloses a method of recording to a log file information about events, said log file stored on a security server, said events comprising requests for action on a requested protected object initiated by a requester device.

### DESCRIPTION OF THE INVENTION

The method that is the object of the invention offers a solution to the aforementioned problem making use of coding techniques and certifications which ensure not only that access to a specific digital content can be quantified, managed and controlled, but also that said quantification, certification and identification are endorsed by certifications that irrefutably ensure that the constituent data of said digital content are truthful and have been verified and certified.

The system of the invention has, for the purpose of carrying out the proposed solution, at least one main server with access to a network (such as the Internet) which is in charge of storing the digital content. In turn, in said server said digital contents are encapsulated inside a container; likewise, said container can be encrypted, guaranteeing their integrity and therefore preventing both manipulation thereof and access to the digital content it contains. In an alternative embodiment of the invention, the coding or encryption can be carried out in an independent coding server accessible from the main server.

Therefore, the user who possesses the digital content, either because he/she has generated it or has access thereto, can access the main server through a web-based application for transferring one or more digital contents to the main server; it must be pointed out that said user may or may not be the owner of the digital content rights uploaded to the server.

Once the digital content reaches the main server, said digital content is encapsulated in a container created with a digital certificate, thereby guaranteeing the integrity of the container and, consequently, the digital content encapsulated therein. Likewise, said container includes a client-type application that executes a series of instructions related to timestamp calls and/or requests, generated by a recognised certification authority, a time-stamp authority.

Once a user accesses the digital content, the application embedded in the container makes a call to the time-stamp authority; said request gives rise to a "time stamp" which is obtained and stored in the log file together with the data related to the digital content accessed. All actions such as downloads, visualisation and total or partial reproduction are considered access to the digital content; therefore, each action generates, as many times as it is performed, a call to said authority and therefore each action is correlated with its corresponding time stamp. The log file includes the data, among others, of the file corresponding to the digital content, the digital file authorship data, the time stamp and the type of access that originated the request. The invention is disclosed in the appended claims.

### BRIEF DESCRIPTION OF THE DRAWINGS

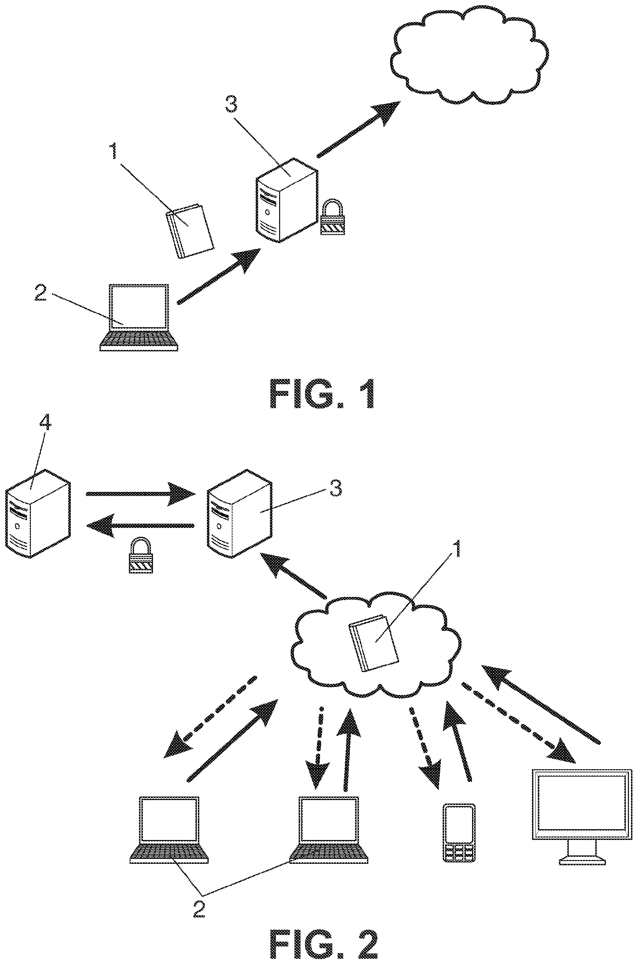

Figure 1 shows a diagram of the operation of the method of the invention.

### PREFERRED EMBODIMENT

In light of the figures, an example of embodiment of the object of the invention for distributing digital contents (1) in a certified and controllable manner is described below.

Digital content (1) is uploaded to a main server (3), where it is encapsulated in a coded container that comprises, among other characteristics, an application which, among other functions, creates access logs, makes copies, performs downloads or other functionalities deemed necessary. In turn, said application embedded in the container incorporates a series of instructions destined for making calls or invocations to different bodies, such as recognised time-stamp authorities, certification authorities or other similar bodies.

Logically, the container is protected against any manipulation thereof, also limiting access to the encapsulated digital content (1); to this end, the container is encrypted and/or protected against third-party actions, such as reverse engineering. In a preferred embodiment of the object of the invention shown in figure 1, said encryption is performed in the main server (3), but in an alternative embodiment of the object of the invention shown in figure 2 said encryption can be performed in a dedicated encryption server (4) accessible from the main server (3), in such a manner that the digital content (1) is telematically sent to the main server (3); in said server it is encapsulated and, through the interaction of the encryption server (4), the container is encrypted, either by sending the encapsulated digital content (1) thereto or remotely, therefore restricting access to the encapsulated digital content (1).

In an even more preferred embodiment of the object of the invention, it is integrated either in a reproducer or visualiser, depending on use and type of digital content (1), a javascript-type application (or other type of application which can be implemented and adapted) which records the reproduction/visualisation of the digital content (1), i.e. it records access to or consumption of said digital content (1), said recording being carried out by invoking the time-stamp authority. The user (2) or user's computer (2) may receive a warning of the record that will be made, for what purpose and his/her consent requested, whereupon a copy of said warning and the terms whereunder the user (2) consents thereto will be sent to his/her e-mail account.

Access to the digital content (1), whether visualisation, reproduction or download of said digital content (1), generates a log (record) wherein, among other data relative to the title and characteristics of the file corresponding to the digital content (1), the owner of the author rights over said digital content (1), the date and time of access to the digital content (1), the IP address of a computer wherefrom the digital content (1) is accessed, the details of the user (2) who accesses the digital content (1) and the e-mail account of said user can be included.

A log is created for all or some of said data which can be stored in a data base accessible from the main server (3); the records can be stored either in the main server (3) or in a trustworthy third-party remote server, where they will remain for an established time of up to five years.

Access to the digital content (1) is restricted if a certification authority or time-stamp authority cannot be invocated.

## Claims

1. A method for irrefutably authenticating access to digital contents, comprising the following steps:
- transmit at least one digital content (1) to a main server (3), **characterised in that**
- encapsulate the digital content (1) in a container at the main server (3),
- encrypt the container at either the main server (3) or at an encryption server accessible from the main server (3),
- invoke at least one certification authority in the container, at least when the digital content is accessed (1), by means of an application embedded in the container,
- invoke a time stamp generated by the certification authority when the application detects the access to the digital content (1), and
- generate a log comprising at least one piece of data relating to the digital content (1), correlated with the time stamp relating to the access to said digital content (1).

2. A method, according to claim 1, **characterised in that** coding of the container is carried out in the main server (3).

3. A method, according to claim 1, **characterised in that** coding of the container is carried out in the encryption server (4) accessible by the main server (3).

4. A method, according to claim 1, **characterised in that** the log is stored in a data base accessible by the main server (3).

5. A method, according to claim 1, **characterised in that** the method additionally comprises sending the log to a digital content (1) rights owner.

6. A method, according to claim 1, **characterised in that** the data referred to the digital content (1) is selected from among the:
- title of the digital content (1),
- characteristics of the file corresponding to the digital content (1),
- owner of the digital content (1) author rights,
- date and time of access to the digital content (1),
- IP address of a computer wherefrom the digital address (1) is accessed,
- details of a user (2) who accesses the digital content (1), and
- details of an e-mail address belonging to the user (2) who accesses the digital content (1).

7. A method, according to claim 1, **characterised in that** the method also comprises:
- generating a network-accessible log which comprises the log data, and
- sending said log to a digital content (1) rights owner and/or to the user (2) who accesses said digital content (1).

## Patentansprüche

1. Verfahren zum unwiderlegbaren Authentifizieren des Zugriffs auf digitale Inhalte, **dadurch gekennzeichnet, dass** es die folgenden Schritte umfasst:
- Übertragen von mindestens einem digitalen Inhalt (1) an einen Hauptserver (3),
- Kapseln des digitalen Inhalts (1) in einem Container an dem Hauptserver (3),
- Verschlüsseln des Containers entweder an dem Hauptserver (3) oder an einem Verschlüsselungsserver, auf welchen von dem Hauptserver (3) zugegriffen werden kann,
- Aufrufen von mindestens einer Zertifizierungsstelle in dem Container, mindestens wenn es auf den digitalen Inhalt zugegriffen wird (1), mittels einer in dem Container eingebetteten Anwendung,
- Aufrufen eines Zeitstempels, welcher von der Zertifizierungsstelle erzeugt wird, wenn die Anwendung den Zugriff auf den digitalen Inhalt (1) erfasst, und
- Erzeugen eines Protokolls, welches mindestens einen Teil der Daten, die sich auf den digitalen Inhalt (1) beziehen, umfasst, in Korrelation mit dem Zeitstempel, welcher sich auf den Zugriff auf den digitalen Inhalt (1) bezieht.

2. Verfahren nach Anspruch 1, **dadurch gekennzeichnet, dass** das Codieren des Containers in dem Hauptserver (3) durchgeführt wird.

3. Verfahren nach Anspruch 1, **dadurch gekennzeichnet, dass** das Codieren des Containers in dem Verschlüsselungsserver (4), auf welchen durch den Hauptserver (3) zugegriffen werden kann, durchgeführt wird.

4. Verfahren nach Anspruch 1, **dadurch gekennzeichnet, dass** das Protokoll in einer Datenbank gespeichert wird, auf welche durch den Hauptserver (3) zugegriffen werden kann.

5. Verfahren nach Anspruch 1, **dadurch gekennzeichnet, dass** das Verfahren ferner das Senden des Protokolls an einen Rechteinhaber des digitalen Inhalts (1) umfasst.

6. Verfahren nach Anspruch 1, **dadurch gekennzeichnet, dass** die Daten, die sich auf den digitalen Inhalt (1) beziehen, aus Folgendem ausgewählt sind:
- Bezeichnung des digitalen Inhalts (1),
- Merkmale der Datei, die dem digitalen Inhalt (1) entspricht,
- Inhaber der Urheberrechte des digitalen Inhalts (1),
- Datum und Zeit des Zugriffs auf den digitalen Inhalt (1),
- IP-Adresse eines Computers, von welchem auf die digitale Adresse (1) zugegriffen wird,
- Details eines Benutzers (2), welcher auf den digitalen Inhalt (1) zugreift, und
- Details einer E-Mail-Adresse, welche dem Benutzer (2) gehört, der auf den digitalen Inhalt (1) zugreift.

7. Verfahren nach Anspruch 1, **dadurch gekennzeichnet, dass** das Verfahren ebenfalls Folgendes umfasst:
- Erzeugen eines durch das Netzwerk zugänglichen Protokolls, welches die Protokolldaten umfasst, und
- Senden des Protokolls an einen Rechteinhaber des digitalen Inhalts (1) und/oder an den Benutzer (2), welcher auf den digitalen Inhalt (1) zugreift.

## Revendications

1. Procédé pour authentifier irréfutablement l'accès aux contenus numériques, comprenant les étapes suivantes :
- transmettre au moins un contenu numérique (1) à un serveur principal (3), **caractérisé en ce que**
- encapsuler le contenu numérique (1) dans un contenant au serveur principal (3),
- crypter le contenant soit au serveur principal (3) soit à un serveur de cryptage accessible depuis le serveur principal (3),
- invoquer au moins une autorité de certification dans le contenant, au moins lorsque le contenu numérique est accédé (1), au moyen d'une application incorporée dans le contenant,
- invoquer un horodateur généré par l'autorité de certification lorsque l'application détecte l'accès au contenu numérique (1),
et
- générer un journal comprenant au moins une pièce de données relative au contenu numérique (1), corrélé à l'horodatage relatif à l'accès audit contenu numérique (1).

2. Procédé, selon la revendication 1, **caractérisé en ce que** le codage du contenant est mis en oeuvre dans le serveur principal (3).

3. Procédé, selon la revendication 1, **caractérisé en ce que** le codage du contenant est mis en oeuvre dans le serveur de cryptage (4) accessible par le serveur principal (3).

4. Procédé, selon la revendication 1, **caractérisé en ce que** le journal est stocké dans une base de données accessible par le serveur principal (3).

5. Procédé, selon la revendication 1, **caractérisé en ce que** le procédé comprend en outre l'envoi du journal à un propriétaire des droits du contenu numérique (1).

6. Procédé, selon la revendication 1, **caractérisé en ce que** les données relatives au contenu numérique (1) sont choisies parmi :
- le titre du contenu numérique (1),
- les caractéristiques du fichier correspondant au contenu numérique (1),
- le propriétaire des droits d'auteur du contenu numérique (1),
- la date et l'heure d'accès au contenu numérique (1),
- l'adresse IP d'un ordinateur à partir duquel l'adresse numérique (1) est accédée,
- les détails d'un utilisateur (2) qui accède au contenu numérique (1), et
- les détails d'une adresse e-mail appartenant à l'utilisateur (2) qui accède au contenu numérique (1).

7. Procédé, selon la revendication 1, **caractérisé en ce que** le procédé comprend en outre :
- la génération d'un journal accessible par réseau qui comprend les données de journal, et
- l'envoi dudit journal à un propriétaire des droits du contenu numérique (1) et/ou à l'utilisateur (2) qui accède audit contenu numérique (1).
